# EUROPEAN PATENT SPECIFICATION

(11) **EP 3 578 302 B1**
(45) Date of publication and mention of the grant of the patent: **02.03.2022**
(21) Application number: 19177994.1
(22) Date of filing: 03.06.2019
(51) Int. Cl.: B25B 29/02

(54) **DEVICE FOR TENSIONING A SCREW**
VORRICHTUNG ZUM SPANNEN EINER SCHRAUBE
DISPOSITIF DE SERRAGE D'UNE VIS

(30) Priority: 07.06.2018 GB 201809348
(43) Date of publication of application: 11.12.2019
(73) Proprietor: Caterpillar Energy Solutions GmbH, 68167 Mannheim (DE)
(72) Inventor: GUISASOLA, Inigo, 68167 Mannheim (DE)
(74) Representative: Novagraaf Group

(56) References cited:
- WO-A1-2017/016654
- DE-U- 7 247 233
- US-A- 4 391 431

## Description

### Technical Field

The present invention pertains to a device for tensioning a screw, for example to be used for tensioning screws for tightening parts of gas internal combustion engines.

### Technological Background

It is well known to tighten screw connections by means of applying a predetermined torque or via a predetermined angle of rotation. In particular for tightening large screws, for instance bigger than M20 screws, the above-mentioned methods are often not accurate enough. Moreover, for large screws, the resulting forces on the contact surfaces of the nut and the part to be tightened by the screw connection are that big that damage of the surfaces occur.

To overcome the aforementioned drawbacks, it is known to tighten a screw connection by tensioning the screw. In this regard, it is known to tension screws by means of hydraulic screw tensioning devices. Such a screw tensioning device is known from WO 2017/016654 A1, which comprises a screw pulling member to be connected to a screw, and a support member. By applying a hydraulic fluid in a piston-cylinder arrangement, the screw pulling member is displaced with respect to the support member leading to tensioning of the screw. The oil pressure for such devices has to be relatively high, for example between 1500 bar and 2000 bar. Hydraulic oil is compressible above 1000 bar, wherein for example known hydraulic oils comprise a volume reduction about 20% at 1000 bar. Accordingly, a lot of compression energy is stored in the oil while tensioning the screw and, hence, in the device. Furthermore, the device has to be connected to a high-pressure pump via a high pressure hose such that in the system containing the hydraulic screw tensioning device, the hose and the pump, and a high amount of oil including a big amount of compression energy is present. Hence, in case of damage of the device or breaking of the screw this high amount of compression energy is released suddenly, which may lead to serious, life-threatening danger for an operator of the hydraulic screw tensioning device and can result in serious damages of the parts to be tightened or the surroundings.

To minimize the above mentioned risks, it is known to use mechanical screw tensioning devices having a wedge mechanism. Such wedge mechanism screw tensioning devices are e.g. known from SU 92949 A1, US 4391431 A1 or SU 1248790 A2. These devices comprise a support member against which a wedge is slidable perpendicular to a longitudinal axis of the screw to be tightened, and a correspondingly shaped second wedge which is part of a screw pulling member. By tensioning an actuator screw, the wedges are displaced with respect to each other such that the screw pulling member is displaced in the longitudinal axis of the screw to be tensioned. Based on the angle of the wedge mechanism relative to the material axis of the screw, the force applied by the actuator screw is multiplied by force/stroke conversion. Thus, a relatively high tensioning force can be applied on the screw to be tightened by means of a relatively small dimensioned actuator screw. The force/stroke conversion of these wedge mechanisms is constant, such that the size of the screws to be tensioned by these devices is limited because when tensioning big screws, e.g. M35, M36 or M40 screws, a relatively high force has to be applied onto the actuator screw.

DE 72 47 233 U relates to a device for pretensioning several screw bolts seated on a bolt circle, wherein a support ring is provided which is supported on a boiler flange, and wherein hydraulically actuated working pistons are mounted on the support ring, the force of which is to be introduced into the screw bolts for elongation of the latter.

### Summary of the Invention

Starting from the prior art, it is an objective to provide a device for tensioning a screw which overcomes the above-mentioned drawbacks.

This objective is solved by means of a device for tensioning a screw with the features of claim 1. Preferred embodiments are set forth in the present specification, the Figures as well as the dependent claims.

Accordingly, a device for tensioning a screw is proposed, containing a screw pulling member comprising an engagement section for engagement with a thread of a screw to be tensioned and further containing a toggle lever mechanism for displacing the screw pulling member relative to a part to be tightened.

### Brief Description of the Drawings

The present disclosure will be more readily appreciated by reference to the following detailed description when being considered in connection with the accompanying drawings in which:
Figure 1 is a schematic perspective side view of a device for tensioning a screw according to a first embodiment;
Figure 2 is a schematic exploded view of the device of Figure 1;
Figure 3 is a schematic sectional view through the device shown in Figure 1 along its longitudinal axis.
Figure 4 is another schematic perspective side view of the device of Figure 1;
Figure 5 is a schematic sectional view through the device shown in Figure 4 along its longitudinal axis.
Figure 6 is another schematic sectional view through the device shown in Figure 1 along its longitudinal axis.
Figure 7 is a schematic perspective side view of a device for tensioning a screw according to a second embodiment;
Figure 8 is a schematic perspective side view of a device for tensioning a screw according to a third embodiment; and
Figure 9 is a schematic perspective side view of a device for tensioning a screw according to a forth embodiment;
Figures 10a and 10b depict parallelograms of forces of the toggle lever mechanism of the device according to Figures 7 to 9 in a first and a second position of the lever members of the toggle lever mechanism.
Figure 11 depict a diagram of a force of an actuator screw over a tension in a corresponding screw to be tensioned.

### Detailed Description of Preferred Embodiments

In the following, the invention will be explained in more detail with reference to the accompanying Figures. In the Figures, like elements are denoted by identical reference numerals and repeated description thereof may be omitted in order to avoid redundancies.

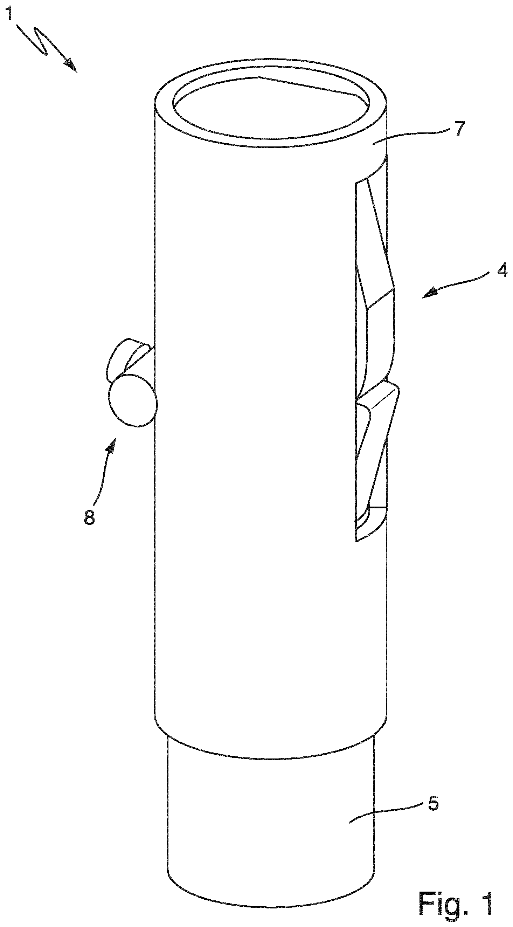

In Figure 1, a schematic perspective side view of a device 1 for tensioning a screw for use of tightening a part to be tightened 5 according to a first embodiment is shown. The device 1 comprises a cylinder-shaped guide 7 substantiality encasing a toggle lever mechanism 4 which is coupled to the guide 7 via an actuator unit 8. The device 1 and its components are described in detail below.

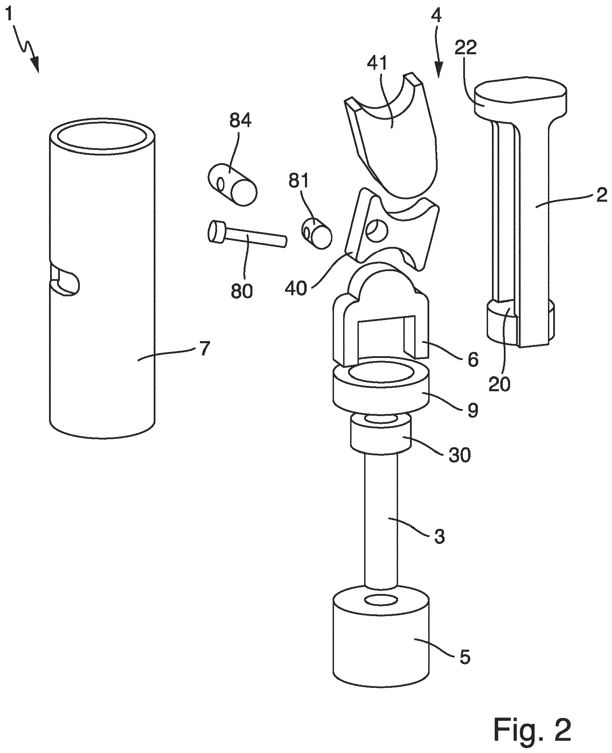

Figure 2 shows a schematic exploded view of the device of Figure 1. As described above, the device 1 comprises the guide 7. Moreover, the device 1 comprises a screw pulling member 2 having an engagement section 20 for engagement with a thread of a screw 3 to be tightened. The screw pulling member 2 is displaced with respect to a part to be tightened 5 via the toggle lever mechanism 4.

The toggle lever mechanism 4 comprises a first lever member 40 and a second lever member 41, an engagement member 81 which engages with an actuator screw 80 of the actuator unit 8, and a support pin 84 which engages with the actuator screw 80 and which is supported against the guide 7. Furthermore, the device 1 comprises an optional distance piece 9 which is to be placed around a nut 30 of the screw 3.

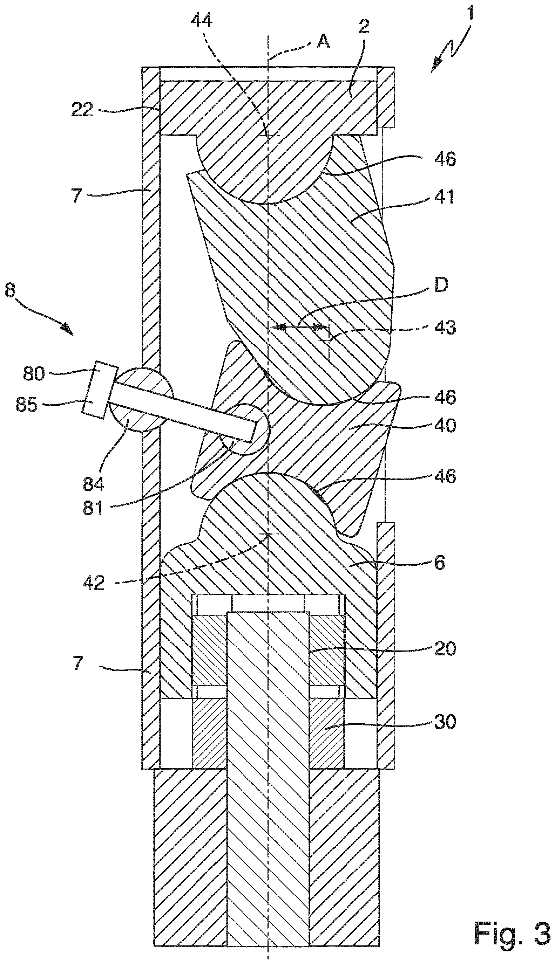

As can be also seen in Figure 3, the screw pulling member 2 comprises guiding areas 22 with which the screw pulling member 2 can slide over an inner circumferential wall of the guide 7.

Figure 3 shows a schematic sectional view through the device 1 shown in Figure 1 along its longitudinal axis A. The first lever member 40 is at a first side pivotably connected with a support member 6 and at a second side pivotably connected with a second side of the second lever member 41, and the second member 40 is pivotably connected with the screw pulling member 2 at a first side of the second lever member 41. Thus, the first lever member 40 is pivotable relative to the support member 6 about a first pivot axis 42 and pivotable relative the second lever member 41 about a second pivot axis 43, and the second lever member 41 is furthermore pivotable relative to the screw pulling member 2 about a third pivot axis 44, wherein the first, second and third pivot axes 42, 43, 44 are aligned parallel to each other.

The engagement member 81 is rotatably supported in the first lever member 40. The support pin 84 is rotatably supported at the guide 7. The actuator screw 80 engages with the engagement member 81 with a thread of the actuator screw 80 and is supported against the support pin 84 in the longitudinal direction of the screw 80 via its head 85. Both the engagement member 81 and the support pin 84 are rotatably supported perpendicular to the longitudinal axis of the actuator screw 80.

The support member 6 supports the toggle lever mechanism 4 against the part to be tightened 5, wherein in this embodiment the distance piece 9 is arranged between the support member 6 and the part to be tightened 5. As can be seen with regard to the pivot axes 42, 43, 44, the toggle lever mechanism 4 is in a pivoted state in which the second pivot axis 43 is spaced apart with the distance D from the longitudinal axis A of the device 1, which, in this embodiment, at the same time is the longitudinal axis of the screw 3 to be tensioned and the pulling direction. Both, the first pivot axis 42 and the third pivot axis 44 intersect with the longitudinal axis A.

Figure 3 shows the device 1 in a position before tensioning the screw 3. That is, the screw pulling member 2 is engaged with the screw 3 via its engagement section 20. In this state, there is no tension on the toggle lever mechanism 4.

The contact areas of the contact surfaces 46 between the support member 6 and the first lever member 40, the first lever member 40 and the second lever member 41, and the second lever member 41 and the screw pulling member 2 are each at least double the size of a cross section of the screw 3. Furthermore, the contact surfaces 46 each comprise a friction-reducing coating.

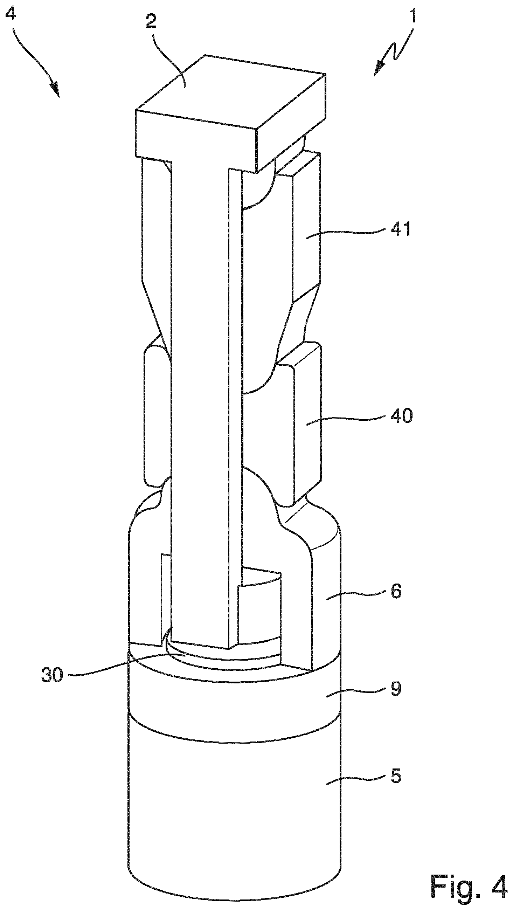

Figure 4 shows another schematic perspective side view of the device 1 of Figure 1, wherein the guide 7 is not shown. In this view, the toggle lever mechanism 4 is in an elongated position in which the screw 3 is tightened via the screw pulling member 2.

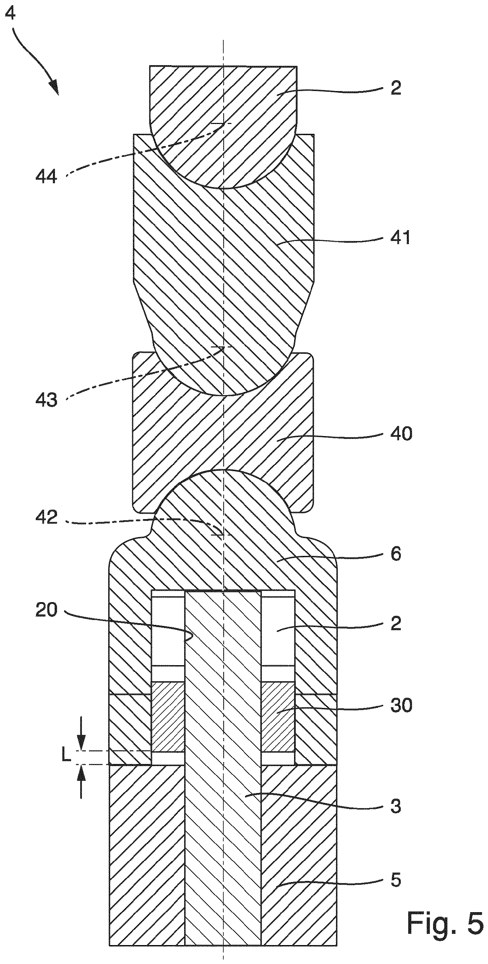

In Figure 5, a schematic sectional view through the device 1 shown in Figure 4 along its longitudinal axis A is depicted. In this position of the toggle lever mechanism 4, the three pivot axes 42, 43, 44 each intersect with the longitudinal axis A. By bringing the second pivot axis 43 in line with the other pivot axes 42, 44, the screw pulling member 2 is displaced in direction of the longitudinal axis A away from the part to be tightened 5, which results in tensioning of the screw 3 in correlation with the elongation L by which the screw 3 is elongated via the displacement of the screw pulling member 2 as described above.

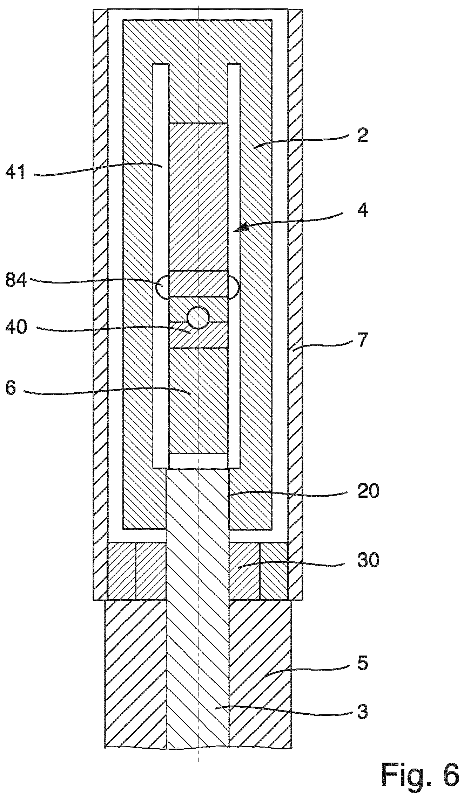

Figure 6 shows another schematic sectional view through the device 1 shown in Figure 1 along its longitudinal axis A perpendicular to the sectional view of Figure 3. In this view, it can be clearly seen that the screw pulling member 2 is supported against the second lever member 41 on a top side of the device 1, extends down on both sides of the toggle lever mechanism 4 and ends in the engagement section 20.

In the following, the functioning of the mechanical force multiplying tensioning device 1 according to the first embodiment is described. In the first step, the nut 30 is screwed onto the screw 3, until it rests on a surface of the part to be tightened 5. Afterwards the distance piece 9 is placed around the nut 30 and onto the part to be tightened 5. Then, the device 1 is placed above the screw and the screw pulling member 2 is brought in engagement with a thread of the screw 3 by rotation of the device 1 about its longitudinal axis A, resulting in a setup as shown in Figure 3.

In a next step, the actuator screw 80 is turned until a predetermined starting tension force is applied onto the screw 3. Determination of the tension force applied on the screw 3 via the device 1 can be achieved by e.g. measuring the stress in the support member 6, e.g. by attaching one or more strain gauges on to the support member 6, by which, after an initial calibration, the force, stress and elongation of the screw 3 can be calculated. Alternatively, other ways of detecting stress, elongation etc. of at least one of the parts of the device 1 can be applied. Detecting stresses or elongation is per se well known. After the starting tension force is reached, the nut 30 is rotated until it makes contact with the surface of the parts to be tightened 5. Thereby, a predetermined starting point is achieved.

In a further step, the actuator screw 80 is further rotated until a second tension force on the screw 3 is reached. After that, the nut 30 is rotated about a predetermined amount of rotations, whereby the nut 30 is displaced towards the part to be tightened 5 about a predetermined distance.

Rotation of the nut 30 is achieved by placing a key (not shown) through a window or notches (not shown) in the guide 7. The latter is known, e.g. from SU 929429 A1.

After rotation of the nut 30, the actuator screw 80 is released and the device 1 is removed. The screw 3 now comprises a predetermined tension, and thus the screw connection is tightened with a predetermined stress level.

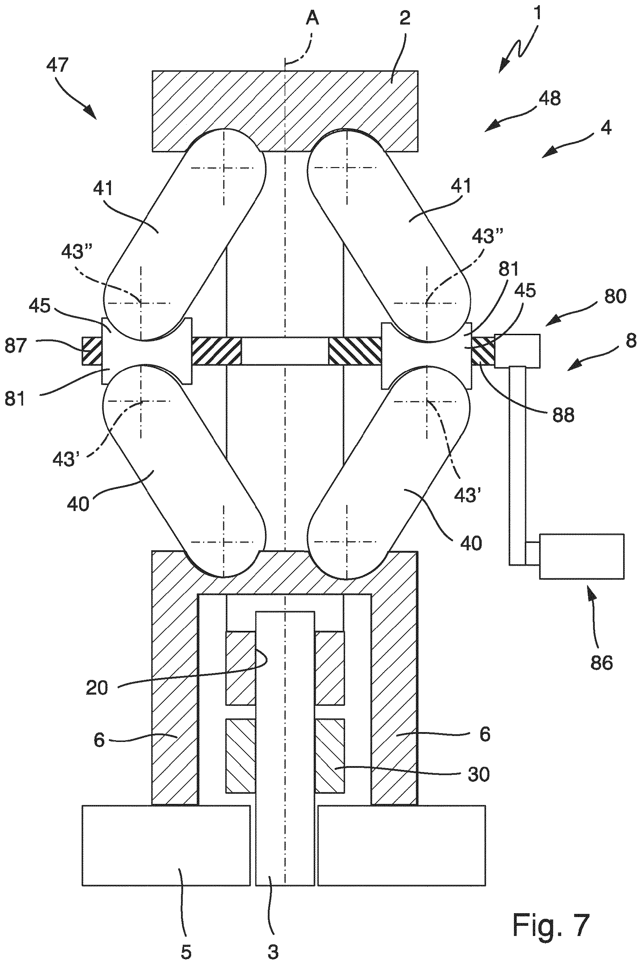

Figure 7 shows a schematic side view of a device 1 for tensioning a screw according to a second embodiment. The device 1 in this embodiment substantially comprises the same structure as the device 1 according to the first embodiment. Unlike the device 1 according to the first embodiment, the device 1 according to the second embodiment comprises two pairs 47, 48 of first and second lever members 40, 41, wherein the two pairs 47, 48 are arranged on opposite sides with respect to the engagement section 20. Both pairs 47, 48 each comprise an engagement member 81 provided in form of a connection member 45 which connects the first lever member 40 and the second lever member 41. The actuator screw 80 has the form of a jackscrew and comprises a first threaded section 87 engaging with the engagement member 81 of the first pair 47 and a second threaded section 88 having a pitch opposite to the pitch of the first threaded section 87 and engaging with the engagement member 81 of the second pair 48. Furthermore, the support member 6 is in direct contact with the part to be tightened 5.

For rotating the actuator screw 80, a lever 86 is attached to the screw 80. The lever 86 may further comprise a torque measuring device (not shown) which is per se known.

Due to provision of the connection member 45, the second pivot axis 43 is split into two second pivot axes 43' and 43".

By rotating the actuator screw 80 in a clockwise direction, the connection members 45 are displaced towards each other, which results in a displacement of the screw pulling member 2 along the longitudinal axis A away from the parts to be tightened 5. Thereby, the screw 3 can be tensioned as described with respect to the first embodiment.

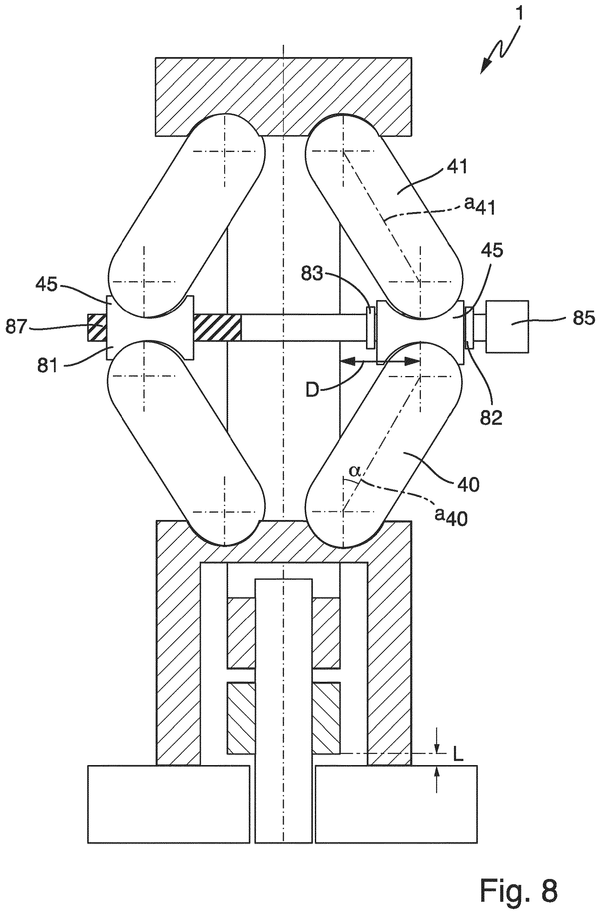

Figure 8 shows a schematic side view of a device 1 for tensioning a screw 3 according to a third embodiment. The device 1 is substantially similar to the device shown in Figure 7, wherein the actuator screw 80 merely comprises the first threaded section 87. At the second pair 48, the actuator screw 80 is rotatably supported against the connection member 45 of the second pair 48. In this regard, the screw 80 comprises a shoulder 82 and a retaining ring 83. The actuator screw 80 is held rotatably about its longitudinal axis in the connection member 45. The shoulder 82 and the retaining ring 83 prevent displacement of the actuator screw 80 along its longitudinal axis.

Furthermore, the actuator screw 80 comprises a head 85 with a hexagon socket (not shown).

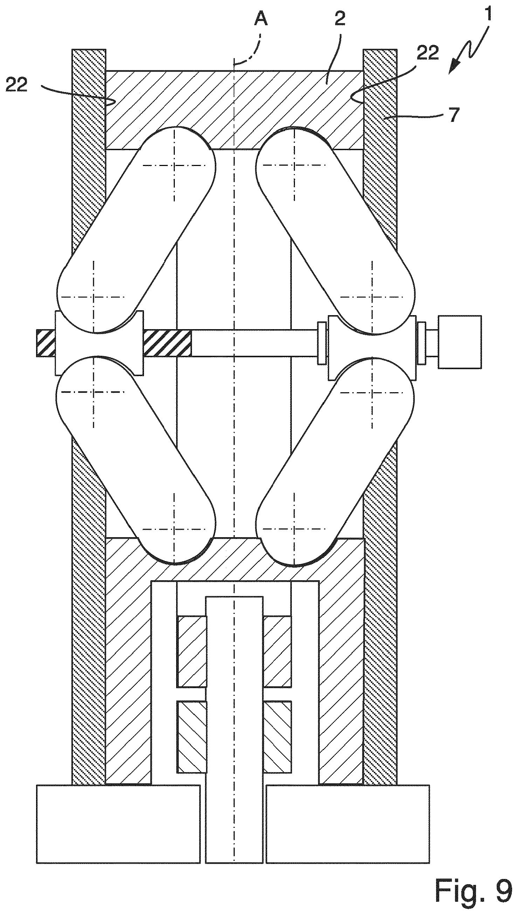

Figure 9 shows a schematic side view of a device 1 for tensioning a screw according to a forth embodiment. The device 1 is substantially the same as the device shown in Figure 8, wherein in addition, a guide 7 is provided in which the screw pulling member 2 is guided in the longitudinal direction A of the device 1 via its guiding areas 22.

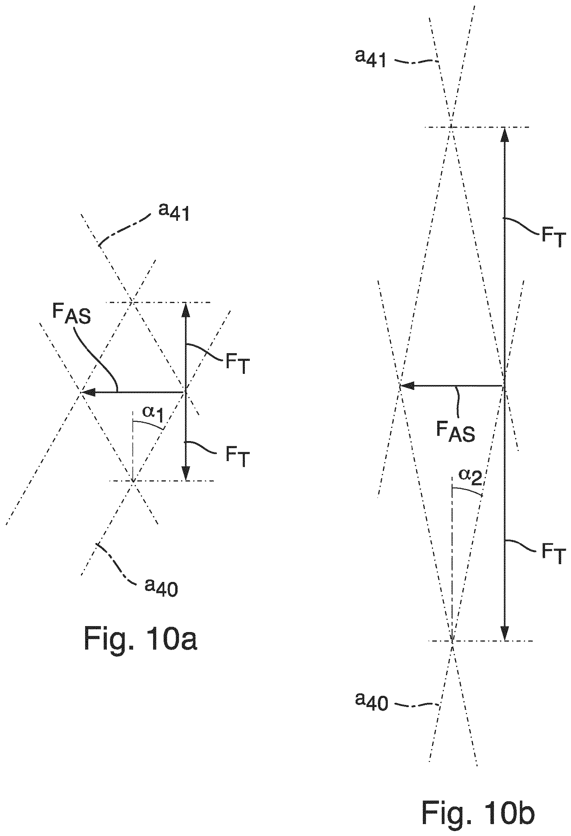

Figures 10a and 10b depict parallelograms of forces of the toggle lever mechanism 4 of the devices shown in Figures 7 to 9 in a first and a second position of the lever members 40, 41 of the toggle lever mechanism 4. Figure 10a shows the kinematics of the device 1 as shown in Figures 7 to 9. With reference signs a40 and a41, the function lines of the first lever member 40 and the second lever member 41 are depicted. The Force Fas is the force applied by the actuator screw. The force Ft is the component of the force transmitted via the first and second lever member 41, 41 which causes tensioning of the screw 3.

Figure 10b shows another parallelogram of forces, wherein the pairs 47,48 of the toggle lever mechanism 4 are in an elongated position with respect to the position shown in Figure 10a. With other words the angle α between the longitudinal direction A and the function line a40 of the first lever member 40 in Figure 10a is bigger than the angle α in Figure 10b. The amount of the force Fas is equal in in Figures 10a and 10b. As can be seen, the resulting tension force Ft in Figure 10b is significantly larger than the resulting tension force Ft as depicted in Figure 10a. Hence, with decreasing angle α, the tension force Ft increases when applying a constant force Fas.

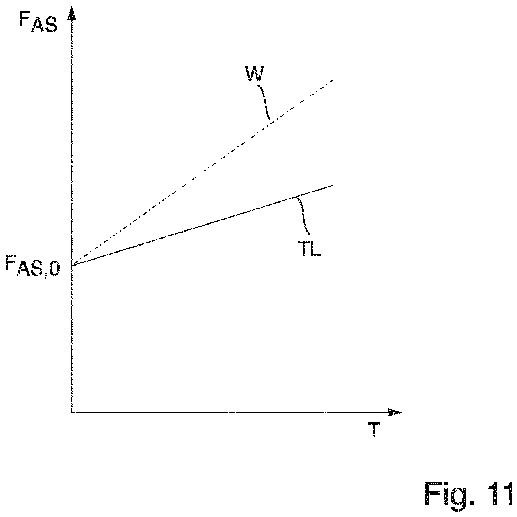

Figure 11 depicts a diagram of a force Fas of an actuator screw over a tension T in a corresponding screw to be tensioned. With the reference signs W the distribution of force of an actuator screw of a device for tensioning a screw having a wedge mechanism is depicted, and with the reference sign TL the distribution of force of the actuator screw 80 according to a device having a toggle lever mechanism is depicted. As can be seen, with increasing tension T the force and hence the stress of a actuator screw in a wedge mechanism raises significantly higher than the force and stress of a actuator screw 80 for a toggle lever mechanism 4 according to the invention.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

This is particular the case with respect to the following optional features which may be combined with some or all embodiments, items and/or features mentioned before in any technically feasible combination.

A device for tensioning a screw may be provided, which may contain a screw pulling member comprising an engagement section for engagement with a thread of a screw to be tensioned and further containing a toggle lever mechanism for displacing the screw pulling member relative to a part to be tightened.

It has been found that by means a toggle lever mechanism for displacing the screw pulling member relative to a part to be tightened, using a hydraulic fluid which could become compressed may not be necessary any more. Furthermore, by the toggle lever mechanism, a force/stroke conversion may be provided which may differ with the position orientation of the toggle lever mechanism. In other words, the ratio of the resulting force applied on the screw to be tensioned by the screw pulling member via the toggle lever mechanism and the force applied on the toggle lever mechanism for generating the above-mentioned resulting force may raise with decreasing pitch of the toggle lever mechanism with respect to a longitudinal axis of the screw to tensioned. A possible consequence may be that also big screws, e.g. M35, M36 or even M40 could be tensioned to the required extent by a relatively small force applied upon the toggle lever mechanism. In addition, by means of the toggle lever mechanism, the tension on the screw may be set relatively exact, which could be advantageous for e.g. screws tightening a piston rod or a cylinder head of a stationary gas combustion engine.

Moreover, also for tensioning and subsequently tightening big and very big screws up to M40 and bigger, there may be no need for providing a hydraulic system. Thus, user safety may be significantly increased. The device according to the embodiment above furthermore may facilitate service and maintenance of e.g. gas combustion engines in the field, as the necessity of setting up a whole hydraulic system for tensioning the screws of the engine may be eliminated. As a possible consequence, also the necessary man hours and thus the operating costs may be decreased significantly, as merely a single operator may be able to operate the device and a second worker operating the high-pressure pump may not be needed anymore.

It is advantageous to provide save and rigid support of the toggle lever mechanism against the part to be tightened. In this regard, according to the invention, device further comprises a support member for supporting the toggle lever mechanism against the part to be tightened.

According to the invention, the toggle lever mechanism comprises a fist lever member and a second lever member, wherein the first lever member may be at a first side pivotably connected with the support member and at a second side pivotably connected with a second side of the second lever member, and the second member may be pivotably connected with the screw pulling member at a first side of the second lever member. By this structure, an exponentially increasing force/stroke conversion ratio may be provided. That is, with increasing angle enclosed by the first lever member and the second lever member, thus the angle between the longitudinal axis of the screw and the first lever member and second lever member, respectively, the multiplication of force applied via the toggle lever mechanism may be increased due to its changing kinematics.

A very accurate force multiplication may be achieved, when according to another aspect, the first lever member may be pivotable relative to the support member about a first pivot axis and pivotable relative the second lever member about a second pivot axis, and the second member may be pivotable relative to the screw pulling member about a third pivot axis, wherein preferably the first, second and third pivot axis could be aligned parallel to each other.

As it could be advantageous to further increase the accuracy of the device, according to another aspect, the device further may comprise a guide for guiding the screw pulling member in direction of a pulling axis defined by the guide. The pulling axis may correspond to the longitudinal axis of the screw to be tensioned.

In another aspect, the toggle lever mechanism may comprise an actuator unit, wherein the actuator unit may be configured to define a position of the first lever member and/or the second lever member. Thereby, among others, the amount of tensioning, with other words the elongation of the screw can be set very accurate by means of the actuator unit.

When the actuator unit may be a lever arm rigidly connected to the first lever member or the second lever member, an operator for instance merely would have to apply a relatively small force onto the lever arm for creating a tensioning force via the screw pulling member onto the screw to be tensioned.

In another aspect, the actuator unit may comprise an actuator screw, preferably a jackscrew, in engagement with an engagement member, wherein the actuator unit may be configured so that a rotation of the actuator screw causes pivoting of the first lever member and/or the second lever member. Thereby, for instance, the tensioning force can be applied very accurate as it may be in direct relation with the torque and the angle of rotation, respectively, applied onto the actuator screw.

Among others, a very simple, compact and at the same time rigid structure could be accomplished when according to another aspect, the engagement member may be arranged at the first lever member, the second lever member or a connection member pivotably connecting the first lever member and the second lever member, wherein preferably the actuator screw may be rotatably supported at the guide and/or the support member.

Alternatively, the actuator screw may be rotatably supported at the first lever member, the second lever member or a connection member pivotably connecting the first lever member and the second lever member, wherein the engagement member may be arranged at the guide and/or the support member.

For instance a particularly rigid and compact structure of the device could be attained when the support member and the first lever member may comprise complementarily formed, arc-shaped contact surfaces forming a pivot hinge for enabling pivoting of the first lever member about the support member and/or wherein the first lever member and the second lever member may comprise complementarily formed, arc-shaped contact surfaces forming a pivot hinge for enabling pivoting of the first lever member and the second lever member relative to each other, and/or wherein the screw pulling member and the second lever member may comprise complementarily formed, arc-shaped contact surfaces forming a pivot hinge for enabling pivoting of the second lever member about the screw pulling member.

According to another aspect, the support member and the first lever member may be connected via a bolt connection, and/or wherein the first lever member and the second lever member may be connected via a bolt connection, and/or wherein the screw pulling member and the second lever member may be connected via a bolt connection. Bolt connections are per se well known and thus easily to design and form.

Among others for ensuring persistence of the device and/or avoiding damages due to excessively high compressive stress in the parts of the device, according to another aspect, a contact area of the contact surfaces or a contact area of the bolt connections may be at least double the size of a cross section of a screw for which the engagement section is configured to engage with.

When the contact surfaces or the surfaces of the parts forming the bolt connections may comprise a friction-reducing coating, wear and damages due to friction could be significantly reduced or even substantially avoided.

According to another aspect, the toggle lever mechanism may comprise two pairs of first and second lever members, wherein the two pairs may be arranged on opposite sides with respect to the engagement section. Thereby, a force on the device lateral to the pulling direction and tensioning direction, respectively, could potentially be minimized or even completely avoided, as the directions of the lateral forces acting on the first pair and the second pair may oppose each other and, as a result, may compensate each other. An accordingly designed device, thus, could comprise a very simple structure.

According to another aspect, the actuator screw may be supported on both pairs, wherein preferably the actuator screw may be rotatably supported at the first pair and the second pair may comprise the engagement member, or the actuator screw may be rotatably supported at the second pair and the first pair may comprise the engagement member, or both pairs each may comprise an engagement member, wherein the actuator screw may comprise a first threaded section engaging with the engagement member of the first pair and a second threaded section having a pitch opposite to the pitch of the first threaded section engaging with the engagement member of the second pair. Thereby, the pairs and the actuator screw also may have the function of a guide for the screw pulling member.

According to another aspect, the toggle lever mechanism may be arranged on a side of the support member facing away from a contact part of the support member making contact with the part to be tightened. This may lead to a very simple and rigid structure of the device.

### Industrial Applicability

With reference to the Figures, a device 1 for tensioning a screw 3 is suggested, containing a screw pulling member 2 comprising an engagement section 20 for engagement with a thread of a screw 3 to be tensioned, and a toggle lever mechanism 4 for displacing the screw pulling member 2 relative to a part to be tightened 5.

The device 1 as mentioned above is applicable for tightening screws, in particular for tightening large screws, for instance bigger than M20 screws. The device can be engaged with a thread of a screw to be tightened, and then, the toggle lever mechanism can be operated such that the screw pulling member tensions the screw. Afterwards, a nut engaging with the thread of the screw can be rotated towards a part to be tightened. After loosening the toggle lever, a tightened screw connection is provided. The device as mentioned above is in particular applicable for tightening screws tightening a piston rod or a cylinder head of a stationary gas combustion engine.

Hence, using a hydraulic fluid which could become compressed is not necessary for tensioning a screw to be tightened any more. Also, service and maintenance of e.g. gas combustion engines in the field can be facilitated, as the necessity of setting up a whole hydraulic system for tensioning the screws of the engine may be eliminated.

## Claims

1. Device (1) for tensioning a screw (3), containing:
a screw pulling member (2) comprising an engagement section (20) for engagement with a thread of a screw (3) to be tensioned,
a toggle lever mechanism (4) for displacing the screw pulling member (2) relative to a part to be tightened (5), and
a support member (6) for supporting the toggle lever mechanism (4) against the part to be tightened (5),
**characterized in that**
the toggle lever mechanism (4) comprises a fist lever member (40) and a second lever member (41), wherein the first lever member (40) is at a first side pivotably connected with the support member (6) and at a second side pivotably connected with a second side of the second lever member (41), and the second lever member (41) is pivotably connected with the screw pulling member (2) at a first side of the second lever member (41).

2. Device (1) according to claim 1, wherein the first lever member (40) is pivotable relative to the support member (6) about a first pivot axis (42) and pivotable relative the second lever member (41) about a second pivot axis (43), and the second member (41) is pivotable relative to the screw pulling member (2) about a third pivot axis (44), wherein preferably the first, second and third pivot axis (42, 43, 44) are aligned parallel to each other.

3. Device (1) according to any one of the preceding claims, further comprising a guide (7) for guiding the screw pulling member (2) in direction of a pulling axis defined by the guide (7).

4. Device (1) according to any one of the preceding claims, wherein the toggle lever mechanism (4) comprises an actuator unit (8), wherein the actuator unit (8) is configured to define a position of the first lever member (40) and/or the second lever member (41).

5. Device (1) according to claim 4, wherein the actuator unit (8) is a lever arm rigidly connected to the first lever member (4) or the second lever member (41).

6. Device (1) according to claim 4, wherein the actuator unit (8) comprises an actuator screw (80), preferably a jackscrew, in engagement with an engagement member (81), wherein the actuator unit (8) is configured so that a rotation of the actuator screw (80) causes pivoting of the first lever member (40) and/or the second lever member (41).

7. Device (1) according to claim 6, wherein the engagement member (81) is arranged at the first lever member (40), the second lever member (41) or a connection member (45) pivotably connecting the first lever member (40) and the second lever member (41), wherein preferably the actuator screw (80) is rotatably supported at a guide (7) and/or the support member (6).

8. Device (1) according to claim 6 or 7, wherein the actuator screw (80) is rotatably supported at the first lever member (40), the second lever member (41) or a connection member (45) pivotably connecting the first lever member (40) and the second lever member (41), wherein preferably the engagement member (81) is arranged at the guide (7) and/or the support member (6).

9. Device (1) according to any one of the preceding claims, wherein the support member (6) and the first lever member (40) comprise complementarily formed, arc-shaped contact surfaces (46) forming a pivot hinge for enabling pivoting of the first lever member (40) about the support member (6) **and/or** wherein the first lever member (40) and the second lever member (41) comprise complementarily formed, arc-shaped contact surfaces (46) forming a pivot hinge for enabling pivoting of the first lever member (40) and the second lever member (41) relative to each other, **and/or** wherein the screw pulling member (2) and the second lever member (41) comprise complementarily formed, arc-shaped contact surfaces (46) forming a pivot hinge for enabling pivoting of the second lever member (41) about the screw pulling member (2).

10. Device (1) according to any one of the preceding claims, wherein the support member (6) and the first lever member (40) are connected via a bolt connection, **and/or** wherein the first lever member (40) and the second lever member (41) are connected via a bolt connection, **and/or** wherein the screw pulling member and the second lever member (41) are connected via a bolt connection.

11. Device (1) according to claims 9 or 10, wherein a contact area of the contact surfaces (46) or a contact area of the bolt connections is at least double the size of a cross section of a screw (3) for which the engagement section (20) is configured to engage with, and/or the contact surfaces (46) or the surfaces of the parts forming the bolt connections comprise a friction-reducing coating.

12. Device (1) according to any one of the preceding claims, wherein the toggle lever mechanism (4) comprises two pairs (47, 48) of first and second lever members (40, 41), wherein the two pairs (47, 48) are arranged on opposite sides with respect to the engagement section (20).

13. Device (1) according to claim 12, wherein the actuator screw (80), is supported on both pairs (47, 48), wherein preferably the actuator screw (80) is rotatably supported at the first pair (47) and the second pair (48) comprises the engagement member (81), or the actuator screw (80) is rotatably supported at the second pair (48) and the first pair (47) comprises the engagement member (81), or both pairs (47, 48) each comprise an engagement member (81), wherein the actuator screw (80) comprises a first threaded section (87) engaging with the engagement member (81) of the first pair (47) and a second threaded section (88) having a pitch opposite to the pitch of the first threaded section (87) engaging with the engagement member (81) of the second pair (48).

## Patentansprüche

1. Vorrichtung (1) zum Spannen einer Schraube (3), enthaltend:
ein Schraubenzugelement (2), umfassend einen Eingriffsabschnitt (20) zum Eingriff mit einem Gewinde einer zu spannenden Schraube (3),
einen Kniehebelmechanismus (4) zum Verschieben des Schraubenzugelements (2) relativ zu einem anzuziehenden Teil (5), und
ein Stützelement (6) zum Abstützen des Kniehebelmechanismus (4) gegen das zu spannende Teil (5),
**dadurch gekennzeichnet, dass**
der Kniehebelmechanismus (4) ein erstes Hebelelement (40) und ein zweites Hebelelement (41) umfasst, wobei das erste Hebelelement (40) an einer ersten Seite schwenkbar mit dem Stützelement (6) verbunden ist und an einer zweiten Seite schwenkbar mit einer zweiten Seite des zweiten Hebelelements (41) verbunden ist, und das zweite Hebelelement (41) an einer ersten Seite des zweiten Hebelelements (41) schwenkbar mit dem Schraubenzugelement (2) verbunden ist.

2. Vorrichtung (1) nach Anspruch 1, wobei das erste Hebelelement (40) relativ zu dem Trägerelement (6) um eine erste Schwenkachse (42) schwenkbar ist und relativ zu dem zweiten Hebelelement (41) um eine zweite Schwenkachse (43) schwenkbar ist, und das zweite Element (41) relativ zu dem Schraubenzugelement (2) um eine dritte Schwenkachse (44) schwenkbar ist, wobei vorzugsweise die erste, zweite und dritte Schwenkachse (42, 43, 44) parallel zueinander ausgerichtet sind.

3. Vorrichtung (1) nach einem der vorstehenden Ansprüche, ferner umfassend eine Führung (7) zum Führen des Schraubenzugelements (2) in Richtung Zugachse, die durch die Führung (7) definiert ist.

4. Vorrichtung (1) nach einem der vorstehenden Ansprüche, wobei der Kniehebelmechanismus (4) eine Aktuatoreinheit (8) umfasst, wobei die Aktuatoreinheit (8) konfiguriert ist, eine Position des ersten Hebelelements (40) und/oder des zweiten Hebelelements (41) zu definieren.

5. Vorrichtung (1) nach Anspruch 4, wobei die Aktuatoreinheit (8) ein Hebelarm ist, der starr mit dem ersten Hebelelement (4) oder dem zweiten Hebelelement (41) verbunden ist.

6. Vorrichtung (1) nach Anspruch 4, wobei die Aktuatoreinheit (8) eine Aktuatorschraube (80), vorzugsweise eine Spannschraube, in Eingriff mit einem Eingriffselement (81) umfasst, wobei die Aktuatoreinheit (8) so konfiguriert ist, dass eine Drehung der Aktuatorschraube (80) ein Schwenken des ersten Hebelelements (40) und/oder des zweiten Hebelelements (41) bewirkt.

7. Vorrichtung (1) nach Anspruch 6, wobei das Eingriffselement (81) an dem ersten Hebelelement (40), dem zweiten Hebelelement (41) oder einem Verbindungselement (45) angeordnet ist, das das erste Hebelelement (40) und das zweite Hebelelement (41) schwenkbar verbindet, wobei vorzugsweise die Aktuatorschraube (80) an einer Führung (7) und/oder dem Stützelement (6) drehbar gelagert ist.

8. Vorrichtung (1) nach Anspruch 6 oder 7, wobei die Aktuatorschraube (80) drehbar an dem ersten Hebelelement (40), dem zweiten Hebelelement (41) oder einem Verbindungselement (45) gelagert ist, das das erste Hebelelement (40) und das zweite Hebelelement (41) schwenkbar verbindet, wobei vorzugsweise das Eingriffselement (81) an der Führung (7) und/oder dem Stützelement (6) angeordnet ist.

9. Vorrichtung (1) nach einem der vorstehenden Ansprüche, wobei das Stützelement (6) und das erste Hebelelement (40) komplementär geformte, bogenförmige Kontaktflächen (46) umfassen, die ein Schwenkgelenk bilden, um ein Schwenken des ersten Hebelelements (40) um das Stützelement (6) zu ermöglichen, **und/oder** wobei das erste Hebelelement (40) und das zweite Hebelelement (41) komplementär geformte, bogenförmige Kontaktflächen (46), die ein Schwenkgelenk bilden, um ein Schwenken des ersten Hebelelements (40) und des zweiten Hebelelements (41) relativ zueinander zu ermöglichen, **und/oder** wobei das Schraubenzugelement (2) und das zweite Hebelelement (41) komplementär geformte, bogenförmige Kontaktflächen (46), die ein Schwenkgelenk bilden, um ein Schwenken des zweiten Hebelelements (41) um das Schraubenzugelement (2) zu ermöglichen, umfassen.

10. Vorrichtung (1) nach einem der vorstehenden Ansprüche, wobei das Stützelement (6) und das erste Hebelelement (40) über eine Bolzenverbindung verbunden sind, **und/oder** wobei das erste Hebelelement (40) und das zweite Hebelelement (41) über eine Bolzenverbindung verbunden sind, **und/oder** wobei das Schraubenzugelement und das zweite Hebelelement (41) über eine Bolzenverbindung verbunden sind.

11. Vorrichtung (1) nach Anspruch 9 oder 10, wobei ein Kontaktbereich der Kontaktflächen (46) oder ein Kontaktbereich der Bolzenverbindungen mindestens doppelt so groß ist wie ein Querschnitt einer Schraube (3), für die der Eingriffsabschnitt (20) zum Eingriff ausgebildet ist, und/oder die Kontaktflächen (46) oder die Oberflächen Teile, welche die Bolzenverbindungen bilden, eine reibungsmindernde Beschichtung umfassen.

12. Vorrichtung (1) nach einem der vorstehenden Ansprüche, wobei der Kniehebelmechanismus (4) zwei Paare (47, 48) von ersten und zweiten Hebelelementen (40, 41) umfasst, wobei die zwei Paare (47, 48) bezüglich des Eingriffsabschnitts (20) auf gegenüberliegenden Seiten angeordnet sind.

13. Vorrichtung (1) nach Anspruch 12, wobei die Aktuatorschraube (80) auf beiden Paaren (47, 48) gelagert ist, wobei vorzugsweise die Aktuatorschraube (80) an dem ersten Paar (47) drehbar gelagert ist und das zweite Paar (48) das Eingriffselement (81) umfasst, oder die Aktuatorschraube (80) an dem zweiten Paar (48) drehbar gelagert ist und das erste Paar (47) das Eingriffselement (81) umfasst, oder beide Paare (47, 48) jeweils ein Eingriffselement (81) umfassen, wobei die Aktuatorschraube (80) einen ersten Gewindeabschnitt (87), der mit dem Eingriffselement (81) des ersten Paars (47) in Eingriff steht, und einen zweiten Gewindeabschnitt (88) mit einer Steigung, die der Steigung des ersten Gewindeabschnitts (87) gegenüberliegt, der mit dem Eingriffselement (81) des zweiten Paars (48) in Eingriff steht, umfasst.

## Revendications

1. Dispositif (1) pour la mise en tension d'une vis (3), contenant :
un élément de traction de vis (2) comprenant une section de mise en prise (20) pour mise en prise avec un filet d'une vis (3) à mettre en tension,
un mécanisme de levier à bascule (4) pour le déplacement de l'élément de traction de vis (2) par rapport à une partie à serrer (5), et
un élément de support (6) pour supporter le mécanisme de levier à bascule (4) contre la partie à serrer (5),
**caractérisé en ce que**
le mécanisme de levier à bascule (4) comprend un premier élément de levier (40) et un deuxième élément de levier (41), dans lequel le premier élément de levier (40) est au niveau d'un premier côté relié de façon pivotante à l'élément de support (6) et au niveau d'un deuxième côté relié de façon pivotante à un deuxième côté du deuxième élément de levier (41), et le deuxième élément de levier (41) est relié de façon pivotante à l'élément de traction de vis (2) au niveau d'un premier côté du deuxième élément de levier (41).

2. Dispositif (1) selon la revendication 1, dans lequel le premier élément de levier (40) peut pivoter par rapport à l'élément de support (6) autour d'un premier axe de pivotement (42) et peut pivoter par rapport au deuxième élément de levier (41) autour d'un deuxième axe de pivotement (43), et le deuxième élément (41) peut pivoter par rapport à l'élément de traction de vis (2) autour d'un troisième axe de pivotement (44), dans lequel de préférence les premier, deuxième et troisième axes de pivotement (42, 43, 44) sont alignés parallèles les uns aux autres.

3. Dispositif (1) selon l'une quelconque des revendications précédentes, comprenant en outre un guide (7) pour le guidage de l'élément de traction de vis (2) en direction d'un axe de traction défini par la guide (7).

4. Dispositif (1) selon l'une quelconque des revendications précédentes, dans lequel le mécanisme de levier à bascule (4) comprend une unité d'actionneur (8), dans lequel l'unité d'actionneur (8) est configurée pour définir une position du premier élément de levier (40) et/ou du deuxième élément de levier (41).

5. Dispositif (1) selon la revendication 4, dans lequel l'unité d'actionneur (8) est un bras de levier solidarisé au premier élément de levier (4) ou au deuxième élément de levier (41).

6. Dispositif (1) selon la revendication 4, dans lequel l'unité d'actionneur (8) comprend une vis d'actionneur (80), de préférence un vérin à vis, en prise avec un élément de mise en prise (81), dans lequel l'unité d'actionneur (8) est configurée de sorte qu'une rotation de la vis d'actionneur (80) amène un pivotement du premier élément de levier (40) et/ou du deuxième élément de levier (41).

7. Dispositif (1) selon la revendication 6, dans lequel l'élément de mise en prise (81) est agencé au niveau du premier élément de levier (40), du deuxième élément de levier (41) ou d'un élément de liaison (45) reliant de façon pivotante le premier élément de levier (40) et le deuxième élément de levier (41), dans lequel de préférence la vis d'actionneur (80) est supportée en rotation au niveau d'un guide (7) et/ou de l'élément de support (6).

8. Dispositif (1) selon la revendication 6 ou 7, dans lequel la vis d'actionneur (80) est supportée en rotation au niveau du premier élément de levier (40), du deuxième élément de levier (41) ou d'un élément de liaison (45) reliant de façon pivotante le premier élément de levier (40) et le deuxième élément de levier (41), dans lequel de préférence l'élément de mise en prise (81) est agencé au niveau du guide (7) et/ou de l'élément de support (6).

9. Dispositif (1) selon l'une quelconque des revendications précédentes, dans lequel l'élément de support (6) et le premier élément de levier (40) comprennent des surfaces de contact en forme d'arc, formées de façon complémentaire (46) formant une charnière à pivot pour permettre un pivotement du premier élément de levier (40) autour de l'élément de support (6) **et/ou** dans lequel le premier élément de levier (40) et le deuxième élément de levier (41) comprennent des surfaces de contact en forme d'arc, formées de façon complémentaire (46) formant une charnière à pivot pour permettre un pivotement du premier élément de levier (40) et du deuxième élément de levier (41) l'un par rapport à l'autre, **et/ou** dans lequel l'élément de traction de vis (2) et le deuxième élément de levier (41) comprennent des surfaces de contact en forme d'arc, formées de façon complémentaire (46) formant une charnière à pivot pour permettre un pivotement du deuxième élément de levier (41) autour de l'élément de traction de vis (2).

10. Dispositif (1) selon l'une quelconque des revendications précédentes, dans lequel l'élément de support (6) et le premier élément de levier (40) sont reliés par l'intermédiaire d'une liaison par boulon, **et/ou** dans lequel le premier élément de levier (40) et le deuxième élément de levier (41) sont reliés par l'intermédiaire d'une liaison par boulon, **et/ou** dans lequel l'élément de traction de vis et le deuxième élément de levier (41) sont reliés par l'intermédiaire d'une liaison par boulon.

11. Dispositif (1) selon les revendications 9 ou 10, dans lequel une aire de contact des surfaces de contact (46) ou une aire de contact des liaisons par boulon vaut au moins le double de la taille d'une section transversale d'une vis (3) avec laquelle la section de mise en prise (20) est configurée pour venir en prise, et/ou les surfaces de contact (46) ou les surfaces des parties formant les liaisons par boulon comprennent un revêtement réducteur de frottement.

12. Dispositif (1) selon l'une quelconque des revendications précédentes, dans lequel le mécanisme de levier à bascule (4) comprend deux paires (47, 48) de premier et deuxième éléments de levier (40, 41), dans lequel les deux paires (47, 48) sont agencées sur des côtés opposés par rapport à la section de mise en prise (20).

13. Dispositif (1) selon la revendication 12, dans lequel la vis d'actionneur (80), est supportée sur l'une et l'autre des paires (47, 48), dans lequel de préférence la vis d'actionneur (80) est supportée en rotation au niveau de la première paire (47) et la deuxième paire (48) comprend l'élément de mise en prise (81), ou la vis d'actionneur (80) est supportée en rotation au niveau de la deuxième paire (48) et la première paire (47) comprend l'élément de mise en prise (81), ou l'une et l'autre des paires (47, 48) comprennent chacune un élément de mise en prise (81), dans lequel la vis d'actionneur (80) comprend une première section filetée (87) venant en prise avec l'élément de mise en prise (81) de la première paire (47) et une deuxième section filetée (88) ayant un pas opposé au pas de la première section filetée (87) venant en prise avec l'élément de mise en prise (81) de la deuxième paire (48).
